# EUROPEAN PATENT SPECIFICATION

(11) **EP 2 033 492 B1**
(45) Date of publication and mention of the grant of the patent: **04.12.2013**
(21) Application number: 07747441.9
(22) Date of filing: 16.05.2007
(51) Int. Cl.: H05B 3/82, A47J 27/21

(54) **DEVICE FOR HEATING LIQUIDS**
VORRICHTUNG ZUM ERHITZEN VON FLÜSSIGKEITEN
DISPOSITIF DE CHAUFFAGE DE LIQUIDES

(30) Priority: 23.05.2006 NL 2000080
(43) Date of publication of application: 11.03.2009
(73) Proprietor: Ferro Techniek Holding B.V., 7011 AT Gaanderen (NL)
(72) Inventor: KAASTRA, Simon, 7091 HV Dinxperlo (NL)
(74) Representative: Cross, James Peter Archibald
(86) International application number: PCT/NL2007/050217
(87) International publication number: WO 2007/136256

(56) References cited:
- WO-A-01/67818
- WO-A-98/03038
- GB-A- 2 294 187

## Description

The invention relates to a device for heating an object, comprising the object and at least one electrical heating element for the object connected to the object, which heating element comprises a heat-generating layer, a heating body and a dielectric therebetween.

Devices for heating objects, such as for instance kitchen appliances, laboratory equipment, rice cookers, water kettles and electric water kettles, generally comprise heating elements for heating the object and the liquid optionally present in the object. Such heating elements are for instance described in the Netherlands patent application NL 1014601. Described herein is a heating element, for instance for heating liquid in liquid containers or for heating of heating plates, wherein an electrical resistance is heated by throughfeed of current. In addition to this heat-generating layer, the known heating element is provided with a dielectric which separates the heating body of the heating element from the heat-generating layer, in this case the electrical resistance. The intermediate layer with dielectric properties not only provides a good transmission of the developed heat to the heating body, but also acts as protection against overheating. Such a protection can for instance comprise a temperature-sensitive electrical circuit which switches off the device when the heating element overheats in the case an appliance is for instance switched on without liquid being present to which the heating element can transfer the heat. The known heating elements are generally applied as separate unit. This means that an object for heating must be placed by the user in the vicinity of the heating element in order to make contact with the heating body and thus be able to absorb the heat from the heating element. It is inevitable here that heat is lost due to the presence of an air layer between the heating element and the object, and more particularly between the heating body and the object.

According to the one aspect of the present invention, there is provided a method according to claim 1. According to another aspect of the invention, there is provided a heating device according to claim 14. By connecting heating element and object by means of a welded connection which is arranged according to the invention such that it does not extend into the dielectric, not only is a more efficient heating of the object achieved, and if desired the content thereof, but it is also achieved that the intermediate layer with dielectric properties is practically undamaged during the welding, whereby a good transmission of the developed heat to the heating body is ensured and the protection from overheating is furthermore not adversely affected.

It has been found that by applying a laser source during the welding the heating can be carried out locally such that, while sufficient heat is generated to cause melting and fusing of the parts for connecting, the dielectric and/or possible other components of the object and/or heating element are not adversely affected by the influence of the generated heat. This is surprising because the heat generated by a laser source is generally very great. Temperatures of for instance 1000-1500°C in the vicinity of the focus of the laser beam are thus not unusual. How locally the laser source must be directed does of course depend on the conditions, for instance on the amount of heat to the generated, the dimensions of the heating body and so forth, wherein it will be apparent that a skilled person can readily make this choice after acquainting him/herself with these conditions. It has been found that when use is made of conventional welding techniques, such as for instance TIG welding, plasma welding, welding with an acetylene flame, electrode welding and the like, degradation of the dielectric layer occurs, whereby it can no longer perform its function, or only to a lesser extent.

In a preferred embodiment of the method according to the invention wherein the object and the electrical heating element for the object consist at least partially of metal, object and heating element are brought into contact with said metal parts, thus forming the welding position, and heated locally with a laser welding source, this such that the metal parts melt locally and thus form a metallic welded connection. This method has the advantage that a strong and durable connection is formed, during the forming of which no additional metal has to be supplied.

Another preferred embodiment of the method according to the invention is characterized in that the object and the electrical heating element for the object consist at least partially of plastic, wherein the object and the heating element are brought into contact with said plastic parts, thus forming the welding position, and are heated locally with a laser welding source, this such that the plastic parts melt locally and thus form a plastic welded connection. Such a method has the additional advantage that it can be performed at generally lower temperatures, thereby further reducing the chance of the dielectric, among other parts, being adversely affected.

In order to ensure that the laser beam of the laser source only heats the parts for heating locally, in other words only heats them such that at least the dielectric is not affected, the focus of the laser beam is preferably adjusted such that it does not extend into the dielectric. This adjustment is easily realized by the skilled person. An even better method is obtained if the focus of the laser beam is adjusted such that it extends no further than into the heating body. There are additional advantages here if the focus of the laser beam remains a determined distance removed from the dielectric. This distance depends, among other factors, on the conditions, for instance on the amount of heat to be generated, on the dimensions of the heating body and so forth, wherein it will be apparent that the skilled person can readily make this choice after acquainting him/herself with these conditions.

A laser source which can be applied in the present method according to the invention must preferably have a large local energy density. Although depending to some extent on the local conditions, particularly suitable energy densities generally lie in the range of about 0.1x10¹⁰ to 10x10¹⁰ W/cm, more preferably 0.5x10¹⁰ to 5x10¹⁰ W/cm, and most preferably of 1x10¹⁰ to 3x10¹⁰ W/cm.

The device according to the invention can in principle comprise any combination of an object for heating and at least one heating element. The advantages of the invention become most clearly manifest however when the object comprises a container for heating a liquid or other medium. During the heating of liquids there is the danger of condensation forming along the container wall, whereby condensation can seep relatively easily to the electrical components of the heating element, resulting in the danger of short-circuit. This is of course undesirable. There is less risk of this occurring in the device according to the invention because the heating element and the liquid container are mutually connected via the welded connection. The danger of short-circuit otherwise remains present, for which preferred embodiments of the device have however been developed. These are elucidated below.

There are further advantages in characterizing the device according to the invention in that at least a wall part of the object is formed by the heating element. As it were replacing a portion of the wall of the object, for instance a liquid container, with a heating element achieves an excellent heat transfer from heating element to the container and the content thereof. In a further preferred embodiment the wall part of the object is the bottom of the container.

The welded connection between the container and the heating element can in principle be realized in different ways. An especially preferred device has the feature however that the container has an opening in its wall at the position of the wall part, which opening is covered by the heating element, wherein the heating element at least partially overlaps with the peripheral edge of the opening, and wherein the welded connection is located in the overlapping portion. It has been found that by connecting container and heating element in the stated manner the risk of short-circuit is markedly reduced, since seepage of condensation moisture to conducting parts of the heating element occurs considerably less, or even not at all.

Although the device according to the invention can be applied with any type of heating element as described in the preamble, there are advantages if the device is characterized in that the heating element comprises a dielectric which comprises at least a first and a second dielectric layer, between which is situated an electrically conductive layer. Although the known heating element provides for a simple detection of temperature changes and protection against overheating, separate provisions generally have to be made to enable proper detection of the leakage current. It is thus occasionally necessary to for instance amplify or, conversely, attenuate the current strength of the leakage current. It has also been found that the leakage current is generally difficult to detect if the heating element is provided with earthing. In that case a galvanically separated transformer system will have to be incorporated in the earth wire, which is time-consuming. The present preferred embodiment has the additional advantage that an improved detection of a temperature change in the heating element becomes possible, with a view to protection against overheating and/or regulating of the temperature. Owing to the particular assembly of the dielectric a leakage current flowing in the second dielectric layer will preferably be diverted to the electrically conductive layer, since in such a case the first dielectric layer acts as electrically more insulating layer (relative to the second dielectric layer). A possible detection of this leakage current by an ammeter or voltmeter coupled electrically to the electrically conductive layer or connected thereto in other manner hereby now also becomes possible for very low current strengths or voltages, without separate provisions having to be made for this purpose. This enables a more sensitive temperature measurement with a quicker response time than known heretofore. The regulation furthermore becomes cheaper because it is no longer necessary to incorporate a galvanically separated current transformer in the earth wire. The leakage current is herein preferably measured between the electrically conductive layer embedded between the two dielectric layers and the electrical heating resistance arranged on the second layer. Application of the multilayer dielectric according to the invention further provides additional advantages, which will be further discussed hereinbelow.

A further improved device according to the invention is characterized in that the electrical resistance of the first dielectric layer is higher than the electrical resistance of the second dielectric layer, and that the first dielectric layer is situated closer to the heating body than the second dielectric layer. It has been found that an even more sensitive leakage current measurement is possible due to the further increased electrically insulating action of the first dielectric layer relative to the second dielectric layer. There are advantages here when the first dielectric layer is situated closer to the heating body than the second dielectric layer. In the case of overheating a leakage current will be created from the heat-generating layer in the second dielectric layer which, compared to the first dielectric layer, is situated further from the heating body. This leakage current will then be diverted via the intermediate electrically conductive layer and not flow at all, or only partially, through the first dielectric layer. By measuring the leakage current, if desired in combination with a driving of the heating element as already described above, a very sensitive and rapidly responding protection against overheating is obtained in this preferred embodiment. This embodiment has the additional advantage that the protection against overheating gains in reliability and is for instance resistant to improper use. The operation of the protection is thus highly insensitive to whether or not the heating element, and in particular the heating body, is earthed.

Owing to the particular assembly of the dielectric a leakage current flowing in the second dielectric layer will preferably be diverted to the electrically conductive layer, since in such a case the first dielectric layer acts as electrically more insulating layer (relative to the second dielectric layer). A possible detection of this leakage current by an ammeter or voltmeter coupled electrically to the electrically conductive layer or connected thereto in other manner hereby now also becomes possible for very low current strengths or voltages, without separate provisions having to be made for this purpose. This enables a more sensitive temperature measurement with a quicker response time than known heretofore. The regulation furthermore becomes cheaper because it is no longer necessary to incorporate a galvanically separated current transformer in the earth wire. The leakage current is herein preferably measured between the electrically conductive layer embedded between the two dielectric layers and the electrical heating resistance arranged on the second layer.

The electrically conductive layer can be manufactured from any electrically conductive material known to the skilled person. It is thus possible for instance to apply metal foils for this purpose. It is however advantageous to arrange the electrically conductive layer in the form of an electrically conductive network or grid between the two dielectric layers. Such an embodiment saves weight, limits the total thickness of the heating element and also ensures a good adhesion between the two dielectric layers. This enhances the mechanical integrity of the heating element, in particular also at high temperatures. A particularly suitable material for the electrically conductive layer is selected from the group of efficiently conducting metal oxides. Very suitable is for instance a thick film material with an addition of RuO₂, although silver, palladium, nickel and other metals are also suitable for use as additive in the thick film material for the sensor layer.

The first and second dielectric layers of the heating element according to the invention are preferably arranged as a substantially connected layer on the underlying layer, in this case the heating body for the first layer, and the second dielectric layer (provided with the electrically conductive layer) for the first layer. The layers being substantially well connected is important for the electrically insulating action of the layers at the temperature relevant for this purpose. If the layers contain porosities and/or if they have interruptions of other nature, it will be easily possible for a leakage current or an electrical breakdown to occur there, which is of course undesirable.

The dielectric layers can be manufactured from any material available to the skilled person. It is thus possible to manufacture one or both dielectric layers from a polymer, although these are less suitable for applications where heating to high temperatures must take place. More suitable materials are mixtures of metal oxides and other inorganic oxides. A further preferred embodiment of the invention comprises a device wherein the first and/or second dielectric layer are manufactured from an enamel composition. Particularly suitable are dielectric enamel layers, obtained by fusing a mixture of metal oxides and other inorganic oxides.

If desired, the dielectric can be assembled from a dielectric layer of a polymer and a dielectric layer of enamel. Most preferably however, both dielectric layers are manufactured from enamel. Enamel compositions particularly suitable for this application are marketed under the name Kerdi. The use of an enamel layer as dielectric in the manufacture of, among other products, electrical heating elements is per se known, for instance from NL 1014601. The dielectric herein provides for electrical insulation of the electrical resistance, which generally consists of a metallic track. The manufacture of the dielectric from enamel results here in a mechanically relatively strong dielectric which conducts heat relatively well.

The composition of the enamel for both dielectric layers can be selected within wide limits, this depending on the desired electrical properties, particularly at temperatures occurring during use. The specific electrical resistance of a common enamel composition is generally high at room temperature, usually higher than 1.5x10¹¹ Ω.cm, but can fall drastically as temperatures increase to for instance a typical value of 1.5x10⁷ Ω.cm at 180-400° Celsius. A (relatively small) leakage current through the dielectric becomes possible at such a resistance. The conductivity of an enamel composition can be readily adjusted by for instance making variations in the alkali metal content and/or by adding conducting or, conversely, electrically insulating additives.

The invention will be further elucidated hereinbelow on the basis of several non-limitative exemplary embodiments. Herein:
figure 1 shows a cross-section through a device according to the present invention,
figure 2 shows a detail of a cross-section through an alternative embodiment of a device according to the present invention,
figure 3 shows a detail of an alternative welded connection, and
figure 4 shows a cross-section through another alternative embodiment of a device according to the invention.

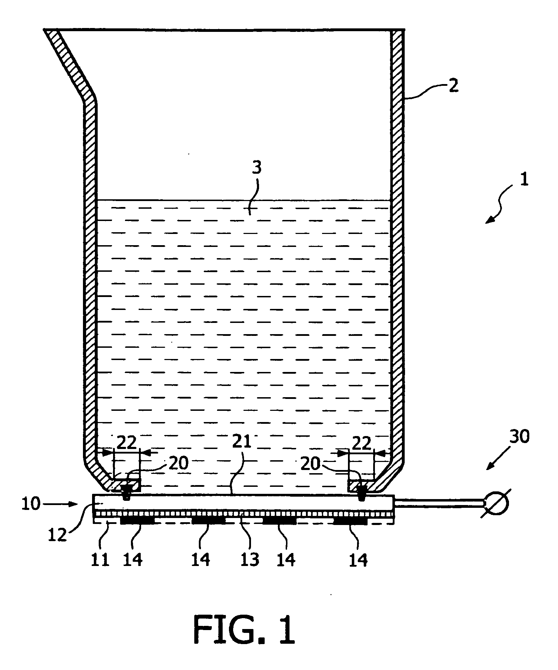

Figure 1 shows a preferred embodiment of a device I according to the present invention for heating a liquid 3 situated in a container 2. Device 1 is provided with one electrical heating element 10 connected to the object for container 2, which heating element 10 comprises a heat-generating layer 11, a heating body 12 and a dielectric 13 therebetween, wherein heating element 10 is connected to at least a portion of container 2 by means of welded connection 20. Heating element 10 is further connected to an electrical circuit 30 which is only shown schematically in figure 1 and which supplies the current particularly for heat-generating layer 11. Heat-generating layer 11 comprises a plurality of electrically conductive resistance elements 14 for the purpose of heating liquid 3. Heating body 12, for instance in the form of a thermally conductive plate, prevents direct contact between resistance elements 14 and the container 2 and liquid 3 to be heated. Conductive plate 12 also provides for heat distribution and an effective heat transfer from resistance elements 14 to liquid 3. Container 2 is welded according to the invention to heating element 10 by placing container 2 and heating element 10 in welding position and heating them locally with a laser welding source (not shown), this such that the heated parts melt locally and thus form a welded connection 20. Making use of a laser welding source can prevent dielectric 13 being heated by the laser beam such that dielectric 13 is adversely affected. According to the invention welded connection 20 does not therefore extend into dielectric 13, as shown in figure 1. For a further improvement in the heat transfer from heating element 10 to container 2 and liquid 3, a wall part 21 of container 2 - in the shown preferred variant the bottom - is formed by heating element 10. This provides for direct contact between conductive plate 12 and liquid 3. As shown in the figure, container 2 has in the bottom an opening 21 in its wall which is covered by heating element 10, wherein heating element 10 overlaps with a portion 22 of the peripheral edge of opening 21. Welded connection 20 is situated in the overlapping portion 22. It is advantageous here that welded connection 20 runs substantially continuously in peripheral direction of opening 21. It is however also possible for welded connection 20 to run discontinuously, wherein it must be ensured that container 2 connects properly with peripheral edge 22 onto heating element 10.

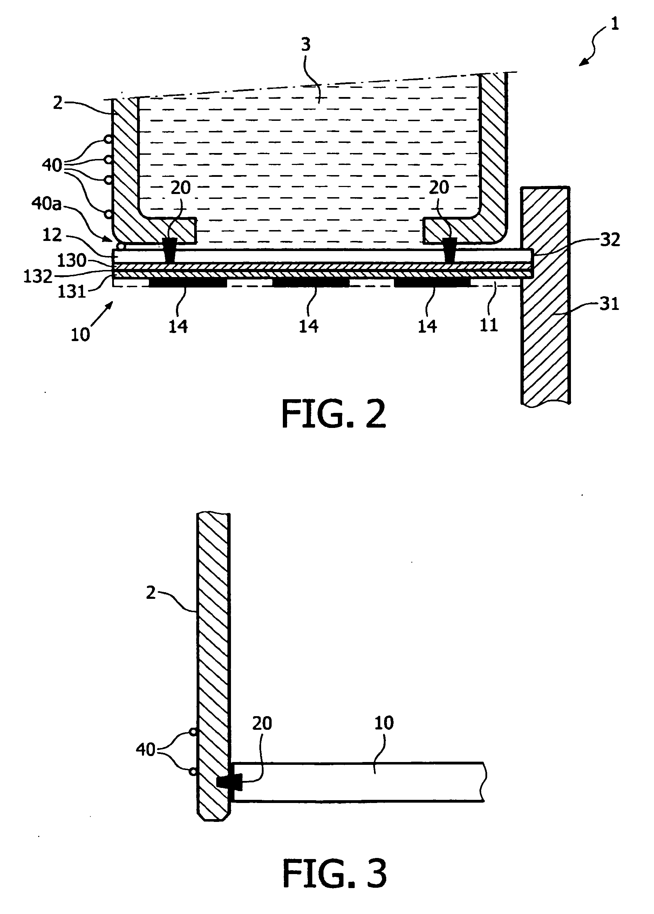

Figure 2 shows a schematic view of a detail of a second preferred embodiment according to the present invention, wherein heating element 10 comprises a dielectric 13 which comprises at least a first dielectric layer 130 and a second dielectric layer 131, between which is situated an electrically conductive layer 132. The electrical resistance of the first dielectric layer 130 is higher than the electrical resistance of second dielectric layer 131. First dielectric layer 130 is moreover situated closer to heating body 12 than second dielectric layer 131. Both layers (130, 131) are manufactured from an enamel composition. According to this preferred variant, heating element 10 comprises a heating plate 12 for heating manufactured from ferritic chromium steel with a content of 18% by weight of chromium. It is also possible to apply another suitable metal or ceramic carrier, such as for instance decarbonized steel, copper, titanium, SiN, Al₂O₃ and so forth. A first dielectric enamel layer 130 is arranged on heating plate 12. The first enamel layer 130 substantially has an enamel composition, the alkali metal content of which differs from that of the second dielectric enamel layer 131. An electrically conductive layer 132 in the form of for instance a grid is arranged on the first relatively electrically insulating enamel layer 130. Grid 132 is manufactured from for instance a thick film layer on a basis of ruthenium oxide (RuO₂) or other suitable conductive (thick film) layers with a suitable conductive material, such as for instance silver, palladium, nickel and so on and/or combinations thereof. A second enamel layer 131 is then arranged on the relatively conductive layer 132. The enamel composition of the second enamel layer 131 preferably has an alkali metal content, and particularly a lithium and/or sodium, and/or potassium content, other than that of the first dielectric enamel layer. The enamel compositions of the first and second dielectric layer are thus chosen such that the specific electrical resistance of second enamel layer 131 decreases at a lower temperature than the specific electrical resistance of the first relatively insulating layer 130. On the second layer 131, which has a better electrical conduction compared to the first layer 130, an electrical heating layer 11 is subsequently arranged in the form of electrical resistance elements or track 14 which can be used to generate heat. In order to monitor the temperature of heating element 10 during use, the sensor layer 132, which has better conduction compared to both the first layer 130 and the second layer 131, provides the option of determining the leakage current through the second, relatively conductive layer 132. The leakage current can for instance be measured as shown in the embodiment of figure 3. In order to earth heating plate 12 an earth wire can if desired be fixed to element plate 12 which is coupled to the earth. For direct measurement of the leakage current through the first layer 130, an ammeter (not shown) can be connected between the electrical resistance layer 11 and conductive layer 132. The magnitude of the measured leakage current is indicative of the magnitude of the highest temperature at a position on the element 10. When a determined temperature is exceeded, the leakage current will increase sharply due to the reduced resistance of the second dielectric layer 131, so that this can be readily detected by the ammeter. Because practically no leakage current flows through the first dielectric layer 130, the measurement of the leakage current by the ammeter becomes much more accurate. The ammeter can optionally be coupled to a control of the power supply to heating resistance elements 14. Electrical circuits which can be used for measuring the leakage current and regulating the power supply are per se known and described in for instance WO 0 167 818. A heating element 10 according to the present preferred embodiment provides great reliability in operation based on the composition and operation of dielectric 13, which comprises two dielectric layers (130, 131) and a thermally conductive layer 132. Damage to one of these layers would nullify this advantage. Device 1 according to the invention and the corresponding method for manufacture thereof have the additional advantage that damage to dielectric 13 is prevented, or is made in every way less likely. This is a great advantage, particularly in the present preferred embodiment. The preferred embodiment of the device according to the invention shown in figure 2 also comprises a suspension body 31, which can for instance be fixed to a wall and in which the electrical circuit 30 can be incorporated. Suspension body 31 is provided with a recess 32 in which for instance a part of heating element 10 of device 1 can be received. Figure 2 also shows condensation bubbles 40 formed on container wall 2. Such bubbles are easily formed during heating of liquid 3, and form a danger of short-circuit if they come into contact with for instance resistance elements 14 of heat-generating layer 11. This is a great danger because in device 1 the heating element 10 is connected to container 2. The method of connection shown in figure 2 prevents bubbles 40 moving beyond the heating element because they will be caught in the gap between heating element 10 and container 2, and will there evaporate. Figure 2 shows schematically a condensation bubble 40a in this position. Another variant of the welded connection is shown in figure 3. Here also a condensation bubble 40 will not be able to come into contact with heating element 10.

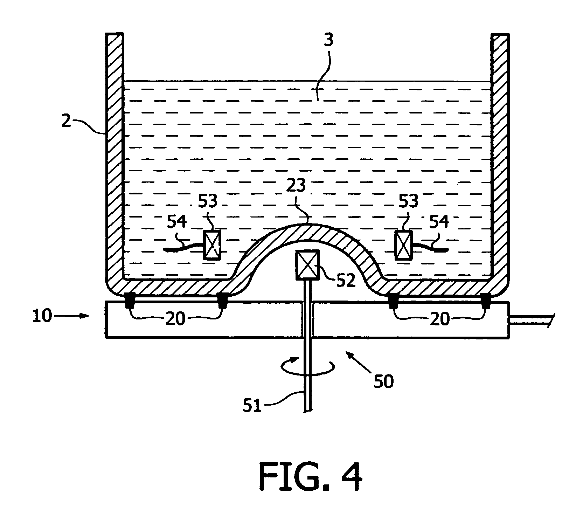

Finally, figure 4 shows another preferred embodiment of a device according to the invention. This device 1 comprises a container 2, for instance for milk, and is further provided with a bell-like bottom part 23. This part 23 can form an integral part of container wall 2, but can also form a separate component which is connected to a heating element 10 in the manner according to the invention via welded connection 20. Device 1 further comprises a stirring device 50 which comprises a stirring magnet 52 connected rotatably to heating element 10 via a drive rod 51. Drive rod 51 can be driven by a motor (not shown). Stirring magnet 52 co-acts magnetically with stirring bodies 53 situated in the milk 3. If desired, stirring bodies 53 can be provided with stirring wings 54. In order to further improve the heat transfer between heating element 10 and liquid 3, portions of the bottom wall of container 2 can if desired be removed (as shown in figure 1) so that direct contact occurs between liquid 3 and heating element 10.

## Claims

1. Method for producing a heating device (1) by welding an object (2) to be heated to an electrical heating element (10) for heating the object (2), which heating element (10) comprises a heat-generating layer (11), a heat distributing body (12) and a dielectric (13) therebetween, the method being **characterised in that** the object (2) and the electrical heating element (10) are brought into welding position, in which the heat distribution body (12) and the object (2) are brought into contact, and heated locally with a laser welding source, such that the heated parts melt locally and thus form a welded connection (20) that does not extend into the dielectric (13).

2. Method as claimed in claim 1, **characterized in that** the object (2) and the electrical heating element (10) for heating the object (2) consist at least partially of metal, wherein the object (2) and the heating element (10) are brought into contact with metal parts, thus forming the welding position, and are heated locally with a laser welding source, such that the metal parts melt locally and thus form a metallic welded connection (20).

3. Method as claimed in claim 1, **characterized in that** the object (2) and the electrical heating element (10) for heating the object consist at least partially of plastic, wherein the object (2) and the heating element (10) are brought into contact with plastic parts, thus forming the welding position, and are heated locally with a laser welding source, such that the plastic parts melt locally and thus form a plastic welded connection (20).

4. Method as claimed in any of the claims 1-3, **characterized in that** the focus of the laser beam is adjusted such that it does not extend into the dielectric (13).

5. Method as claimed in any of the claims 1-3, **characterized in that** the focus of the laser beam is adjusted such that it extends no further than into the heat distributing body (12).

6. Method as claimed in any one of claims 1-5, **characterized in that** the object comprises a container (2) for heating a liquid (3) or other medium.

7. Method as claimed in claim 6, **characterized in that** at least a wall part (21) of the object (2) is formed by the electrical heating element (10).

8. Method as claimed in claim 7, **characterized in that** the wall part (21) of the object is the bottom of the container (2).

9. Method as claimed in claim 7, **characterized in that** the container (2) has an opening in its wall at the position of the wall part (21), which opening is covered by the electrical heating element (10), wherein the electrical heating element (10) at least partially overlaps with the peripheral edge of the opening, and wherein the welded connection (20) is located in the overlapping portion (22).

10. Method as claimed in any one of claims 1 to 9, **characterized in that** the dielectric (13) comprises at least a first and a second dielectric layer (130, 131), between which is situated an electrically conductive layer (132).

11. Method as claimed in claim 10, **characterized in that** the electrical resistance of the first dielectric layer (130) is higher than the electrical resistance of the second dielectric layer (131), and that the first dielectric layer (130) is situated closer to the heat distributing body (12) than the second dielectric layer (131).

12. Method as claimed in claim 10 or 11, **characterized in that** the first and/or the second dielectric layer (130, 131) have an enamel composition.

13. Method as claimed in any preceding claim, wherein the heat distributing body comprises a thermally conductive plate (12).

14. A heating device (1) comprising an object (2) to be heated and at least one electrical heating element (10) for heating the object (2), which heating element (10) comprises a heat-generating layer (11), a heat distributing body (12) and a dielectric (13) therebetween, **characterised in that** the at least one heating element (10) is connected to at least a part of the object (2) by means of the method of any preceding claim.

## Patentansprüche

1. Verfahren zum Herstellen einer Heizvorrichtung (1), indem ein zu erhitzendes Objekt (2) zum Erhitzen desselben an ein elektrisches Heizelement (10) angeschweißt wird, welches Heizelement (10) eine Wärmeerzeugungslage (11), einen Wärmeverteilungskörper (12) und ein dazwischenliegendes Dielektrikum (13) umfasst, wobei das Verfahren **dadurch gekennzeichnet ist, dass** das Objekt (2) und das elektrische Heizelement (10) in Schweißposition gebracht werden, in welcher der Wärmeverteilungskörper (12) und das Objekt (2) miteinander in Kontakt gebracht und örtlich mit einer Laserschweißquelle derart erhitzt werden, dass die erhitzten Teile örtlich schmelzen und somit eine Schweißverbindung (20) bilden, die sich nicht in das Dielektrikum (13) hinein erstreckt.

2. Verfahren nach Anspruch 1, **dadurch gekennzeichnet, dass** das Objekt (2) und das elektrische Heizelement (10) zum Erhitzen des Objekts (2) mindestens teilweise aus Metall bestehen, wobei das Objekt (2) und das elektrische Heizelement (10) zum Bilden der Schweißposition mit Metallteilen in Kontakt gebracht und örtlich mit einer Laserschweißquelle derart erhitzt werden, dass die Metallteile örtlich schmelzen und somit eine metallene Schweißverbindung (20) bilden.

3. Verfahren nach Anspruch 1, **dadurch gekennzeichnet, dass** das Objekt (2) und das elektrische Heizelement (10) zum Erhitzen des Objekts mindestens teilweise aus Kunststoff bestehen, wobei das Objekt (2) und das elektrische Heizelement (10) zum Formen der Schweißposition mit Kunststoffteilen in Kontakt gebracht und örtlich mit einer Laserschweißquelle derart erhitzt werden, dass die Kunststoffteile örtlich schmelzen und somit eine Kunststoff-Schweißverbindung (20) formen.

4. Verfahren nach einem der Ansprüche 1 - 3, **dadurch gekennzeichnet, dass** der Brennpunkt des Laserstrahls derart eingestellt wird, dass er sich nicht in das Dielektrikum (13) hinein erstreckt.

5. Verfahren nach einem der Ansprüche 1 - 3, **dadurch gekennzeichnet, dass** der Brennpunkt des Laserstrahls derart eingestellt wird, dass er sich nur bis in den Wärmeverteilungskörper (12) hinein erstreckt.

6. Verfahren nach einem der Ansprüche 1 - 5, **dadurch gekennzeichnet, dass** das Objekt einen Behälter (2) zum Erhitzen einer Flüssigkeit (3) oder eines anderen Mediums umfasst.

7. Verfahren nach Anspruch 6, **dadurch gekennzeichnet, dass** mindestens ein Wandteil (21) des Objekts (2) durch das elektrische Heizelement (10) gebildet wird.

8. Verfahren nach Anspruch 7, **dadurch gekennzeichnet, dass** das Wandteil (21) des Objekts der Boden des Behälters (2) ist.

9. Verfahren nach Anspruch 7, **dadurch gekennzeichnet, dass** der Behälter (2) eine Öffnung in seiner Wand an der Position des Wandteils (21) aufweist, die von dem elektrischen Heizelement (10) verdeckt wird, wobei das elektrische Heizelement (10) mindestens teilweise den Umfangsrand der Öffnung überlappt, und wobei die Schweißverbindung (20) in dem überlappenden Abschnitt (22) liegt.

10. Verfahren nach einem der Ansprüche 1 - 9, **dadurch gekennzeichnet, dass** das Dielektrikum (13) mindestens eine erste und eine zweite dielektrische Lage (130, 131) umfasst, zwischen denen sich eine elektrisch leitende Lage (132) befindet.

11. Verfahren nach Anspruch 10, **dadurch gekennzeichnet, dass** der elektrische Widerstand der ersten dielektrischen Lage (130) höher als der elektrische Widerstand der zweiten dielektrischen Lage (131) ist, und dass die erste dielektrische Lage (130) näher am Wärmeverteilungskorper (12) als die zweite dielektrische Lage (131) liegt.

12. Verfahren nach Anspruch 10 oder 11, **dadurch gekennzeichnet, dass** die erste und/oder die zweite dielektrische Lage (130, 131) eine Emaille-Zusammensetzung aufweisen.

13. Verfahren nach einem der vorhergehenden Ansprüche, wobei der Wärmeverteilungskörper eine thermisch leitende Platte (12) aufweist.

14. Heizvorrichtung (1), umfassend ein zu erhitzendes Objekt (2) und mindestens ein elektrisches Heizelement (10) zum Erhitzen des Objekts (2), welches Heizelement (10) eine Wärmeerzeugungslage (11), einen Wärmeverteilungskörper (12) und ein dazwischen liegendes Dielektrikum (13) umfasst, **dadurch gekennzeichnet, dass** das mindestens eine elektrische Heizelement (10) mittels des Verfahrens nach einem der vorhergehenden Ansprüche mit mindestens einem Teil des Objekts (2) verbunden ist.

## Revendications

1. Procédé pour produire un dispositif de chauffage (1) par soudage d'un objet (2) à chauffer à un élément chauffant électrique (10) pour chauffer l'objet (2), lequel élément chauffant (10) comprend une couche de génération de chaleur (11), un corps de répartition de chaleur (12) et un diélectrique (13) entre eux, le procédé étant **caractérisé en ce que** l'objet (2) et l'élément chauffant électrique (10) sont amenés dans une position de soudage, dans lequel le corps de répartition de chaleur (12) et l'objet (2) sont amenés en contact, et chauffés localement par une source de soudage au laser, de sorte que les parties chauffées fondent localement et forment ainsi une liaison soudée (20) qui ne s'étend pas dans le diélectrique (13).

2. Procédé selon la revendication 1, **caractérisé en ce que** l'objet (2) et l'élément chauffant électrique (10) pour chauffer l'objet (2) comprennent au moins partiellement du métal, dans lequel l'objet (2) et l'élément chauffant (10) sont mis en contact avec des parties métalliques, formant ainsi la position de soudage, et sont chauffés localement par une source de soudage au laser, de sorte que les parties métalliques fondent localement et forment ainsi une liaison soudée métallique (20).

3. Procédé selon la revendication 1, **caractérisé en ce que** l'objet (2) et l'élément chauffant électrique (10) pour chauffer l'objet comprennent au moins partiellement une matière plastique, dans lequel l'objet (2) et l'élément chauffant (10) sont mis en contact avec des parties en matière plastique, formant ainsi la position de soudage, et sont chauffés localement par une source de soudage au laser, de sorte que les parties en matière plastique fondent localement et forment ainsi une liaison soudée en matière plastique (20).

4. Procédé selon l'une quelconque des revendications 1 à 3, **caractérisé en ce que** la mise au point du faisceau laser est ajustée de sorte qu'il ne s'étende pas dans le diélectrique (13).

5. Procédé selon l'une quelconque des revendications 1 à 3, **caractérisé en ce que** la mise au point du faisceau laser est ajustée de sorte qu'il ne s'étende pas plus loin que dans le corps de répartition de chaleur (12).

6. Procédé selon l'une quelconque des revendications 1 à 5, **caractérisé en ce que** l'objet comprend un contenant (2) pour chauffer un liquide (3) ou un autre milieu.

7. Procédé selon la revendication 6, **caractérisé en ce qu'**au moins une partie de paroi (21) de l'objet (2) est formée par l'élément chauffant électrique (10).

8. Procédé selon la revendication 7, **caractérisé en ce que** la partie de paroi (21) de l'objet est le fond du contenant (2).

9. Procédé selon la revendication 7, **caractérisé en ce que** le contenant (2) comporte une ouverture dans sa paroi à la position de la partie de paroi (21), laquelle ouverture est recouverte par l'élément chauffant électrique (10), dans lequel l'élément chauffant électrique (10) recouvre au moins partiellement le bord périphérique de l'ouverture, et dans lequel la liaison soudée (20) est située dans la partie de superposition (22).

10. Procédé selon l'une quelconque des revendications 1 à 9, **caractérisé en ce que** le diélectrique (13) comprend au moins une première et une deuxième couche diélectrique (130, 131), entre lesquelles une couche électriquement conductrice (132) est située.

11. Procédé selon la revendication 10, **caractérisé en ce que** la résistance électrique de la première couche diélectrique (130) est supérieure à la résistance électrique de la deuxième couche diélectrique (131), et **en ce que** la première couche diélectrique (130) est située plus près du corps de répartition de chaleur (12) que la deuxième couche diélectrique (131).

12. Procédé selon la revendication 10 ou 11, **caractérisé en ce que** les première et/ou deuxième couches diélectriques (130, 131) ont une composition remaillée.

13. Procédé selon l'une quelconque des revendications précédentes, dans lequel le corps de répartition de chaleur comprend une plaque thermoconductrice (12).

14. Dispositif de chauffage (1) comprenant un objet (2) à chauffer et au moins un élément chauffant électrique (10) pour chauffer l'objet (2), lequel élément chauffant (10) comprend une couche de génération de chaleur (11), un corps de répartition de chaleur (12) et un diélectrique (13) entre eux, **caractérisé en ce que** le au moins un élément chauffant (10) est relié à au moins une partie de l'objet (2) au moyen du procédé selon l'une quelconque des revendications précédentes.
